# EUROPEAN PATENT APPLICATION

(11) **EP 4 800 537 A1**
(43) Date of publication of application: **02.09.2026**
(21) Application number: 26159975.7
(22) Date of filing: 23.02.2026
(51) Int. Cl.: G06F 3/12, G06F 3/048

(54) **IMAGE PROCESSING APPARATUS AND CONTROL METHOD FOR IMAGE PROCESSING APPARATUS**

(30) Priority: 26.02.2025 JP 2025029323
(71) Applicant: SHARP Kabushiki Kaisha, Sakai-City, Osaka 590-8522 (JP)
(72) Inventor: ICHIU, Rika, Osaka, 590-8522 (JP)
(74) Representative: Müller Hoffmann & Partner

(57) **Abstract**

An image processing apparatus that holds a print job and applies predetermined processing thereto includes an output device and one or more controllers. The output device outputs: a management screen on which a selection command of the predetermined processing to be applied to the print job is accepted; and an individual screen on which input of an individual setting command corresponding to the predetermined processing is accepted. The one or more controllers control output of the individual screen according to the selection command on the management screen.

## Description

### BACKGROUND OF THE INVENTION

### Field of the Invention

The present disclosure relates to an image processing apparatus and the like.

### Description of the Background Art

There is an image processing apparatus such as a multifunction peripheral that has a function to hold print data received as a print job, a document read by a scanner, facsimile received data, and the like and execute predetermined processing (hereinafter, also referred to as a hold function).

For example, it has been known that, with the hold function, the print data is held in a first storage area for forcible holding during operation of an image forming apparatus in a forcible hold mode even when a command that is received along with the print data is a command indicating to store the print data in a second storage area.

An object of the present disclosure is to provide an image processing apparatus and the like capable of improving a user's convenience in use of a hold function.

### SUMMARY OF THE INVENTION

In order to solve the above problem, an image processing apparatus according to the present disclosure is an image processing apparatus that holds a print job and applies predetermined processing thereto, and includes an output device and one or more controllers. The output device outputs: a management screen on which a selection command of the predetermined processing to be applied to the print job is accepted; and an individual screen on which input of an individual setting command corresponding to the predetermined processing is accepted. The one or more controllers control output of the individual screen according to the selection command on the management screen.

A control method for an image processing apparatus according to the present disclosure is a control method for an image processing apparatus that holds a received print job and applies predetermined processing thereto, and includes: outputting a management screen, on which input of a selection command of the predetermined processing to be applied to the print job is accepted, and an individual screen, on which input of an individual setting command corresponding to the predetermined processing is accepted; and controlling output of the individual screen according to the selection command on the management screen.

The present disclosure can provide the image processing apparatus and the like capable of improving a user's convenience in use of a hold function.

### BRIEF DESCRIPTION OF THE DRAWINGS

FIG. 1 is an external perspective view illustrating an overall configuration of a multifunction peripheral according to a first embodiment.
FIG. 2 is a functional configuration diagram of the multifunction peripheral according to the first embodiment.
FIG. 3 is a flowchart illustrating a processing flow according to the first embodiment.
FIG. 4 is a table illustrating a configuration of a setting table for registering and managing hold functions.
FIG. 5 is a flowchart illustrating a processing flow according to the first embodiment.
FIG. 6 is a view illustrating an operation example according to the first embodiment.
FIGs. 7A and 7B are views each illustrating an operation example according to the first embodiment.
FIGs. 8A and 8B are views each illustrating an operation example according to the first embodiment.
FIGs. 9A and 9B are views each illustrating an operation example according to the first embodiment.
FIG. 10 is a view illustrating an operation example according to the first embodiment.
FIG. 11 is a view illustrating an operation example according to the first embodiment.
FIGs. 12A, 12B, and 12C are views each illustrating an operation example according to the first embodiment.
FIGs. 13A and 13B are views each illustrating an operation example according to the first embodiment.
FIGs. 14A and 14B are views each illustrating an operation example according to the first embodiment.
FIGs. 15A and 15B are views each illustrating an operation example according to the first embodiment.
FIGs. 16A and 16B are views each illustrating an operation example according to the first embodiment.
FIGs. 17A and 17B are views each illustrating an operation example according to the first embodiment.
FIGs. 18A and 18B are tables each illustrating device cloning according to a second embodiment.
FIG. 19 is a table illustrating a third embodiment.
FIGs. 20A, 20B, and 20C are views illustrating the third embodiment.

### DESCRIPTION OF THE PREFERRED EMBODIMENTS

Hereinafter, a description will be made on embodiments of the present disclosure with reference to the drawings. The following embodiments are merely examples for describing the present disclosure, and technical contents described in the claims are not limited to those in the following description.

Various modes of hold functions are known.

A document filing function, as a mode of the hold function, is a function to hold print data received as a print job (also referred to as a printer job), document data read by a scanner, facsimile received data, and the like in an image processing apparatus for printing, transmission, download, and the like of such data. A print release function, as a mode of the hold function, is a function to print the print data, which is held in the image processing apparatus set as a master unit, by an image processing apparatus, which is set as a slave unit, on a network. A my-folder print function, as a mode of the hold function, is a function to automatically generate a my-folder for each user on the basis of a user name, a computer name, or the like that is included in the print data received from a terminal device such as a personal computer (PC) and to store the print data in the generated my-folder.

In order to enable any of these hold functions, it is necessary to restrict job execution such that the job is not immediately executed in response to reception of the data such as the print data. In general, a management screen for managing the job execution restriction is configured to be able to accept input of a selection command of the hold function to be applied when the job execution restriction is enabled.

Meanwhile, each of the hold functions is set via a setting screen that is provided for the respective hold function (hereinafter, also referred to as an individual screen). The user who wishes to make settings of the hold function causes display of the individual screen that corresponds to the desired hold function, and makes various settings of the hold function.

However, in the related art, a content of the selection on the management screen is not reflected to the individual screen. Thus, it is difficult for the user to comprehend, via the individual screen, which of the hold functions is set to be enabled by the job execution restriction.

In the present disclosure, an image processing apparatus and the like capable of improving a user's convenience in use of the hold function by facilitating understanding of which hold function can be used for job execution are realized by the following embodiments.

### 1. First Embodiment

In a first embodiment, a description will be made on a multifunction peripheral as the image processing apparatus according to the present disclosure. The multifunction peripheral is an image processing apparatus capable of realizing jobs related to copying, scanning, faxing, e-mail transmission, and the like in one casing and, for example, capable of printing an image (a color image or a monochrome image), which is based on the print data received as the print job, on a medium such as a sheet of paper.

### 1.1 Functional Configuration of Multifunction Peripheral 10

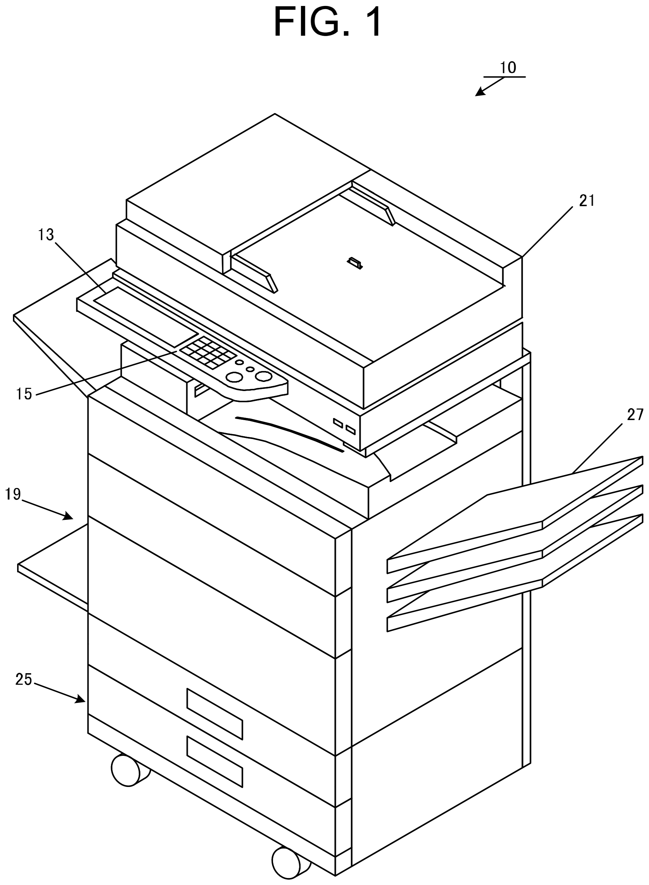

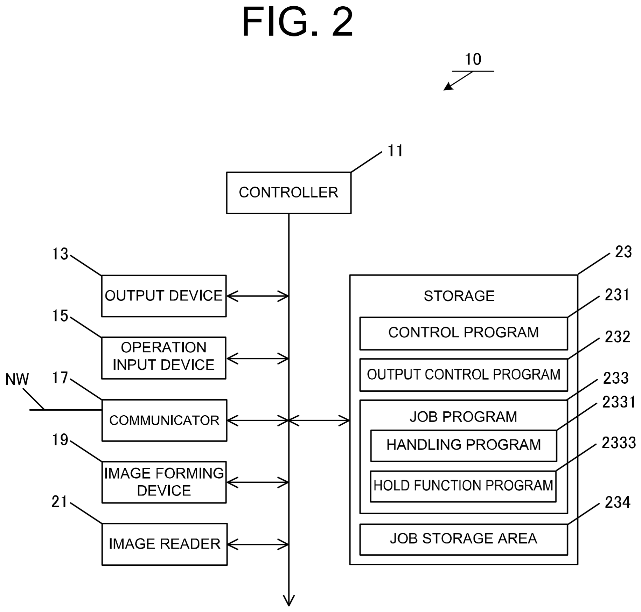

FIG. 1 is an external perspective view illustrating an overall configuration of a multifunction peripheral 10 according to the first embodiment. FIG. 2 is a functional configuration diagram of the multifunction peripheral 10.

The multifunction peripheral 10 includes at least one controller 11, an output device 13, an operation input device 15, a communicator 17, an image forming device 19, an image reader 21, and a storage 23.

The at least one controller 11 comprehensively controls the multifunction peripheral 10. The at least one controller 11 can be formed by one or more arithmetic devices (such as a central processing unit (CPU) or a digital signal processor (DSP)). The at least one controller 11 reads and executes various programs that are stored in the storage 23, and thereby realizes various functions that are implemented by the multifunction peripheral 10. The at least one controller 11 may be formed as a system on a chip (SoC) that has multiple functions among functions described below. The at least one controller 11 may include one or more control circuits.

The output device 13 outputs screen information such as of a management screen and an individual screen. On the management screen, the selection command of the hold function to be applied to the print job is accepted. On the individual screen, input of an individual setting command that corresponds to the hold function is accepted. The output device 13 can be formed by a display device, such as a liquid-crystal display (LCD), an organic electroluminescence (EL) display, a micro LED display, or a mini LED display, capable of displaying various pieces of information to a user or the like. In addition to/instead of being formed as the display device, for example, the output device 13 according to the present disclosure can also be formed as a Web server capable of outputting the screen information of the management screen and the individual screen, via a Web browser, to a terminal device, such as the PC, that is a print request source (a print data output source).

The operation input device 15 accepts input of an operation and input of information from the user or the like. The operation input device 15 can be formed by any of various input devices including operation keys, such as a hard key and a software key, and buttons. Alternatively, the operation input device 15 can be formed as a touch panel display that allows the input via the output device 13. In this case, for example, a resistive film method, an infrared method, an electromagnetic induction method, a capacitive method, or the like can be adopted as an input method to the touch panel display.

The communicator 17 includes a wired/wireless network communication interface for communication with another terminal device such as the PC via a network NW such as a local area network (LAN), a wide area network (WAN), the Internet, a telephone line, or a facsimile line. Examples of the wireless network communication interface may include short-range wireless communication interfaces such as Bluetooth^{®}, Wi-fi^{®}, and IrDA.

The image forming device 19 forms the image based on the print data on the medium such as a sheet of paper. The image forming device 19 is supplied with a sheet from a paper feeder 25, forms the image, which is based on the print data, on the sheet, and thereafter discharges the sheet to a paper ejector 27. The image forming device 19 can be formed by an electrophotographic laser printer or the like, for example. In this case, the image forming device 19 forms the image by using toner that corresponds to toner colors (for example, cyan, magenta, yellow, and black) and is supplied from toner cartridges (not illustrated).

The image reader 21 scans and reads a document image to be read, and thereby generates scan data. The image reader 21 can be formed as a scanner that includes an image sensor such as a charge-coupled device (CCD) or a contact image sensor (CIS). The configuration of the image reader 21 is not limited as long as the image reader 21 is configured to read a reflected light image from the document image with the image sensor and thereby generate the scan data formed by analog signals of RGB (R: red, G: green, B: blue). The image reader 21 can also be formed as an interface that can acquire an image file or image data, for example. The image file is stored in a storage device such as USB memory and is in a file format of TIFF, BMP, JPEG, or the like. The image data is transmitted from another terminal device.

The storage 23 includes one or more storage devices that store various programs required for operation of the multifunction peripheral 10 and various types of data. The storage 23 can be formed by a storage device such as random-access memory (RAM), a solid state drive (SSD), a hard disk drive (HDD), or read-only memory (ROM).

In the first embodiment, the storage 23 stores a control program 231, an output control program 232, and a job program 233, and secures a job storage area 234.

The control program 231 is a program that is read when the at least one controller 11 controls the multifunction peripheral 10 comprehensively. The at least one controller 11 that has read the control program 231 controls driving of hardware such as the output device 13, the operation input device 15, the communicator 17, the image forming device 19, and the image reader 21.

The output control program 232 is a program that is read by the at least one controller 11 when the at least one controller 11 executes output control of the screen displayed on the output device 13 or the operation input device 15, which is formed as the touch panel display. The at least one controller 11 that has read the output control program 232 controls output of an operation screen (for example, the management screen on which the selection command of the hold function is accepted, the individual screen on which the input of the individual setting command corresponding to the hold function is accepted, or the like) that is displayed on the output device 13 (the operation input device 15).

The job program 233 is a program that is read by the at least one controller 11 when the at least one controller 11 executes any of the various jobs such as the print job, a copy job, a scan job, a faxing job, and a mail transmission job. The at least one controller 11 that has read the job program 233 switches an apparatus mode of the multifunction peripheral 10 to a job mode for executing the corresponding job, and executes the job, the execution command of which has been accepted.

The job program 233 according to the first embodiment includes a handling program 2331 and a hold function program 2333. When enabling/disabling of the execution restriction of the print job or the execution restriction of the print job is enabled, the at least one controller 11 that has read the handling program 2331 accepts the selection command of the hold function to be enabled and the like via the management screen. In addition, the at least one controller 11 that has read the handling program 2331 executes exclusive output control of the individual screen that corresponds to the selection command on the management screen, or executes the output control of the management screen on the basis of the setting command on the individual screen, and thereby comprehensively manages and controls each of the functions implemented by the hold function program 2333.

The hold function program 2333 is a program that realizes the hold function according to the present disclosure when being read by the at least one controller 11. In the present disclosure, as the modes of the hold functions that can be realized, the document filing function, the print release function, and the my-folder print function will be described.

The job storage area 234 is a storage area where the print job to be held is stored when the print job execution restriction is enabled. In the job storage area 234, in addition to the print job, information required for the multifunction peripheral 10 to execute the print job (for example, identification information such as a job ID and a job name for uniquely identifying the print job, connection information of the multifunction peripheral 10, print setting information such as the number of printed copies, the number of pages, a paper size, a page layout, color management, a font, and a finishing setting, date and time information on execution date and time (transmission date and time) of the job, and the like) may be stored.

### 1.2 Processing Flow

### 1.2.1 Flow of Overall Processing

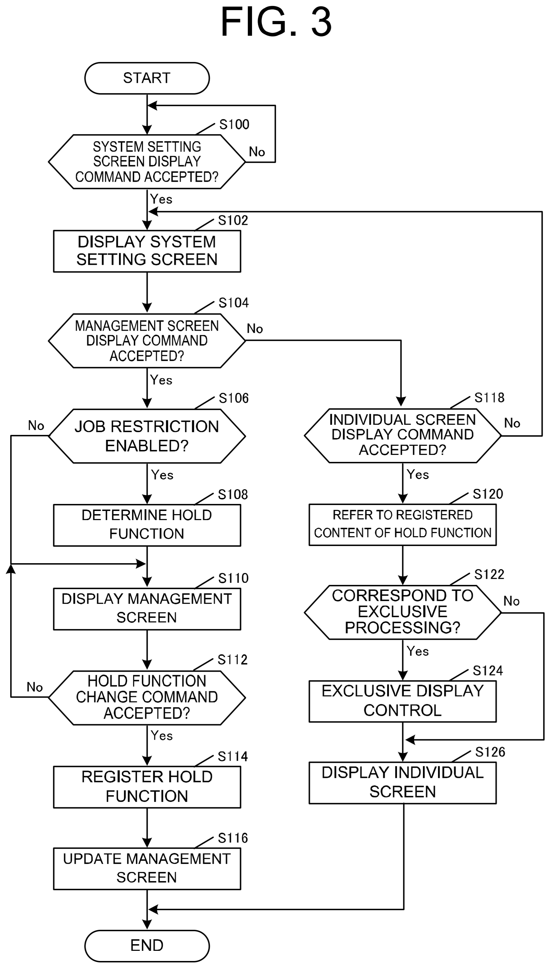

Next, a description will be made on a flow of processing according to the first embodiment. FIG. 3 is a flowchart illustrating a flow of overall processing related to the output of the management screen, on which the selection command of the hold function to be applied to the print job is accepted, and the individual screen, on which the input of the individual setting command corresponding to the hold function is accepted. The processing illustrated in FIG. 3 will be described as processing that is executed when the at least one controller 11 reads the control program 231, the output control program 232, the job program 233 (the handling program 2331 and the hold function program 2333), and the like, and will be described as a mode in which the screen information, such as of the management screen and the individual screen, is output (displayed) on the display device provided in the multifunction peripheral 10.

First, the at least one controller 11 determines whether a display command of a system setting screen, which will be described below, has been accepted from the user (step S100). The at least one controller 11 can determine the display command of the system setting screen from the user, for example, on the basis of whether a selection command of a setting display button that is provided on a home screen (not illustrated) or the like has been accepted. If determining that the display command of the system setting screen has been accepted, the at least one controller 11 displays the system setting screen (step S100; Yes → step S102). On the other hand, if determining that the display command of the system setting screen has not been accepted, the at least one controller 11 stands by until the display command is accepted (Step S100; No).

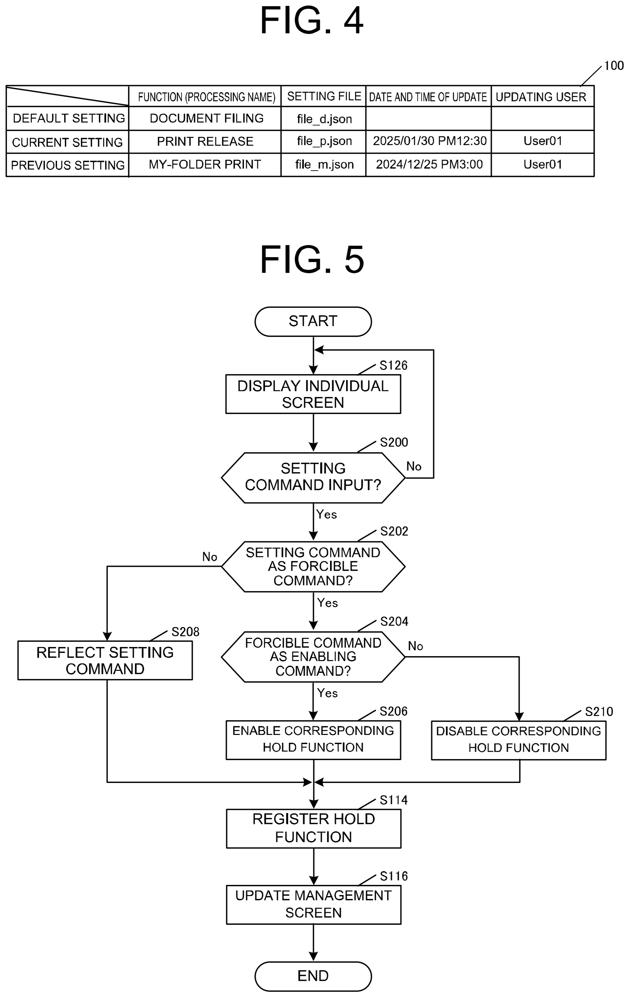

Next, the at least one controller 11 determines whether a display command of the management screen has been accepted from the user (step S104). If determining that the display command of the management screen has been accepted from the user, the at least one controller 11 determines whether the print job execution restriction is set to be enabled (step S104; Yes → step S106). If determining that the print job execution restriction is set to be enabled, the at least one controller 11 refers to a setting table, which will be described with reference to FIG. 4, and determines which of the document filing function, the print release function, and the my-folder print function is the hold function that is currently set to be enabled by referring to a setting table, which will be described with reference to FIG. 4 (step S106; Yes → step S108). However, if determining that the print job execution restriction is set to be disabled, the at least one controller 11 skips processing in step S108, and the processing proceeds to step S110 (step S106; No → step S110).

When executing the determination processing of the hold function in step S108, the at least one controller 11 displays the management screen on the basis of the determination result such that the hold function that is set to be enabled can be identified. On the other hand, if determining in step S106 that the print job execution restriction is set to be disabled, the at least one controller 11 displays the management screen without displaying the hold function in an identifiable manner (step S110).

Then, the at least one controller 11 determines whether a change command of the currently set hold function has been accepted from the user via the management screen (step S112). If determining that the change command of the hold function has been accepted, the at least one controller 11 changes the currently set hold function to the hold function, the change command of which has been accepted, and registers the hold function after the change in the setting table (step S112; Yes → step S114). Next, the at least one controller 11 updates and displays the management screen such that the registered hold function can be identified, and terminates the processing (step S116). If determining that the change command of the hold function has not been accepted, the at least one controller 11 continues displaying the management screen (step S112; No → step S110).

By the way, if determining in step S104 that the display command of the management screen has not been accepted from the user, the at least one controller 11 determines whether a display command of the individual screen that is related to any hold function of the document filing function, the print release function, and the my-folder print function has been accepted (step S104; No → step S118).

If determining that the display command of the individual screen has been accepted, the at least one controller 11 refers to contents of the setting table and determines which hold function of the document filing function, the print release function, and the my-folder print function is the hold function that is currently set to be enabled (step S118; Yes → step S120). Then, the at least one controller 11 determines whether the hold function related to the individual screen, the display command of which has been accepted in step S118, is the hold function that differs from the hold function currently set to be enabled and is a subject of exclusive processing (step S122). If determining that the display command of the individual screen has not been accepted, the processing returns to step S102, and the at least one controller 11 continues displaying the system setting screen (Step S118; No → Step S102).

If determining that the hold function related to the individual screen, the display command of which has been accepted in step S118, is the subject of the exclusive processing, the at least one controller 11 executes exclusive display control for indicating that the hold function related to the individual screen is unavailable, then displays the individual screen, and terminates the processing (step S122; Yes → step S124 → step S126).

On the other hand, if determining that the hold function related to the individual screen, the display command of which has been accepted in step S118, is the same as the hold function that is currently set to be enabled, and is not the subject of the exclusive processing, the at least one controller 11 displays the individual screen without executing the exclusive display control and terminates the processing (step S122; No → step S126).

Here, a description will be made on an exemplary configuration of the setting table, in which the hold functions are registered and managed, with reference to FIG. 4. FIG. 4 illustrates an example of a setting table 100 in a table format as a measure for registering and managing the hold functions. However, the measure for registering and managing the hold functions is not limited to that in the table format, and may be in a mode of registering and managing the hold functions in a database format, or may be an argument that is directly referred to by the handling program 2331 or a function thereof.

The setting table 100 exemplified in FIG. 4 includes, as registered and managed items, a function (a processing name), a setting file, date and time of update, and an updating user, and these items are linked with each of a default setting, a current setting, and a previous setting.

The function (the processing name) represents any hold function of the document filing function, the print release function, and the my-folder print function. The setting file represents a setting file in a json format, an xml format, a text format, or the like in which setting contents related to each of the hold functions are described. The date and time of update represents the date and time information at which the hold function is updated, and the updating user represents user information of the user (a login user of the multifunction peripheral 10) who has updated the hold function.

The default setting represents a hold setting that is set in advance as an initial value at the time of shipment from a factory or the like. FIG. 4 illustrates an example in which the hold function is set to "document filing" and the setting file is set to "file_d.json" as the default setting. Even when the setting item related to the hold setting is changed, the setting item can be returned to that of the default setting by initializing the multifunction peripheral 10, or the like.

The current setting represents the hold setting that is currently set to be enabled. FIG. 4 indicates that, as the current setting, the hold function is "print release", the setting file is "file_p.json", the date and time of update updated as the current setting is "2025/01/30 PM12:30", and the user who has updated the hold function is "User01".

The previous setting represents the hold setting that has been set before being updated to the current setting. FIG. 4 indicates that, as the previous setting, the hold function is "my-folder print", the setting file is "file_m.json", the date and time of update that is updated as the previous setting is "2024/12/25 PM3:00", and the user who has updated the hold function is "User01".

The at least one controller 11 can comprehend the hold function that is currently set to be enabled by referring to the items in the current setting of the setting table 100. When the setting content of the hold function is changed, the at least one controller 11 edits and registers the content of the setting file, can thereby implement the hold function, to which the content of the change is reflected, and can display the corresponding individual screen.

### 1.2.2 Flow of Processing Related to Input of Setting Command Via Individual Screen

Next, a description will be made on a flow of processing related to the input of the setting command via the individual screen with reference to a flowchart in FIG. 5. The processing illustrated in FIG. 5 will also be described as the processing that is executed when the at least one controller 11 reads the control program 231, the output control program 232, the job program 233 (the handling program 2331 and the hold function program 2333), and the like. In addition, a description will be made on an assumption that the individual screen, on which input of the setting of any of the document filing function, the print release function, and the my-folder print function is accepted, is displayed in step S126 of FIG. 3.

The at least one controller 11 determines whether the input of the setting command has been accepted via the displayed individual screen (step S126 → step S200). If determining that the setting command has been accepted, the at least one controller 11 determines whether the accepted setting command is a forcible command to forcibly enable or disable the hold function (step S200; Yes → step S202). If determining that the setting command has not been accepted, the at least one controller 11 continues displaying the individual screen until accepting the setting command (step S200; No → step S126).

If determining that the accepted setting command is the forcible command, the at least one controller 11 determines whether the forcible command is an enabling command to forcibly enable specific hold processing (step S202; Yes → step S204). If determining that the forcible command is the enabling command, the at least one controller 11 enables the corresponding hold function (step S204; Yes → step S206). On the other hand, if determining that the forcible command is not the enabling command, the at least one controller 11 disables the corresponding hold function (step S204; No → step S210).

Then, the at least one controller 11 registers the hold function, which is enabled or disabled, in the setting table, updates the management screen, and terminates the processing (step S114 → step S116).

By the way, if determining in step S202 that the accepted setting command is not the forcible command, the at least one controller 11 reflects the content of the accepted setting command related to the hold function. Then, the at least one controller 11 registers the hold function, the setting command of which is reflected, in the setting table, updates the management screen, and terminates the processing (step S202; No → step S208 → step S114 → step S116).

### 1.3 Operation Example

### 1.3.1 Output (Display) Screen

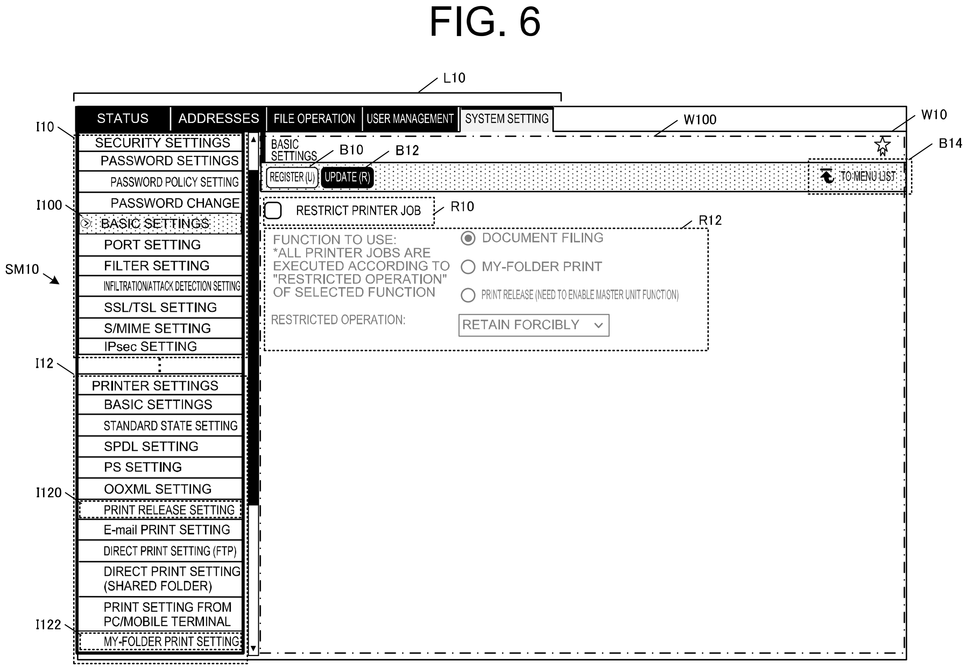

A description will be made on an operation example according to the first embodiment. FIG. 6 is a view illustrating an exemplary display configuration of a system setting screen W10 according to the first embodiment. The system setting screen W10 is a setting screen that is displayed by the at least one controller 11 when the at least one controller 11 accepts a selection command of a "system setting mode" tab that is included in a setting mode list L10 provided to be selectable in an upper portion of the screen.

The system setting screen W10 is configured to be able to accept settings related to system settings such as a home screen setting, a copy setting, a printer setting, a fax image transmission setting, a document filing setting, a common setting, a network setting, a security setting, an energy saving setting, a system management setting, an image quality adjustment setting, and an initial installation setting. The at least one controller 11 displays setting items, which correspond to the setting selected by the user, in a setting item menu SM10 provided on a left side in FIG. 6.

FIG. 6 illustrates an example in which a security setting items I10 related to the security setting and a printer setting items I12 related to the printer setting are displayed in the setting item menu SM10. The security setting items I10 include security-related setting items such as a password setting, basic settings I100, and a port setting. Meanwhile, the printer setting items I12 include printer-related setting items such as basic settings, print release settings I120, and a my-folder print setting I122. The user can make any of various settings by selecting a desired setting item.

FIG. 6 is a view illustrating an exemplary display configuration of a basic setting screen W100 in a default setting state that is displayed as the management screen by the at least one controller 11 when the at least one controller 11 accepts the selection command of the basic settings I100 included in the security setting items I10.

The basic setting screen W100 includes a printer job execution restriction selection area R10, a hold function selection area R12, a register (U) button B10, an update (R) button B12, and a return button B14.

The printer job execution restriction selection area R10 is an area for accepting selection of whether to restrict the execution of the print job at received timing. The printer job execution restriction selection area R10 is provided with a check box to accept the selection command at the time when the execution restriction of the printer job is enabled. When the check box is ticked, the at least one controller 11 restricts the execution of the printer job at the timing of receiving the printer job.

The hold function selection area R12 is an area for accepting the selection command of the hold function to be used. In FIG. 6, it is indicated that any hold function of the document filing function, the my-folder print function, and the print release function can be selected as the hold function. The selection operation via the hold function selection area R12 can be performed when the print job execution restriction is enabled. FIG. 6 illustrates a state where, since the checkbox in the printer job execution restriction selection area R10 is not ticked (the print job execution restriction is disabled), the hold function selection area R12 is grayed out, and the hold function cannot be selected. The "restricting operation" included in the hold function selection area R12 is a pull-down menu for accepting a selection command of the restricting operation that corresponds to the function to be used. In the case where document filing is selected as the hold function (the example in FIG. 6), it is possible to select either one of "retain forcibly (hold forcibly)" and "prohibit jobs other than hold" (an initial value is "retain forcibly"). When print release is selected as the hold function, "retain forcibly" is grayed out, and "restricted operation" is displayed actively. In the case where the printer job execution restriction is disabled, both the "restricted operation" and the pull-down menu are grayed out.

The register (U) button B 10 is a button for accepting a registration command of the selected content on the basic setting screen W100. The update (R) button B12 is a button for accepting an updating command of the hold setting when the currently set hold function is changed to another hold function. The return button B14 is a button for accepting the display command of the menu list. When accepting a selection command of the return button B 14, the at least one controller 11 shifts the screen to a setting list screen (the menu list) that is related to the system setting such as the home screen setting.

### 1.3.2 Output Control of Individual Screen Corresponding to Hold Function, Selection Command of Which is Accepted via Management Screen

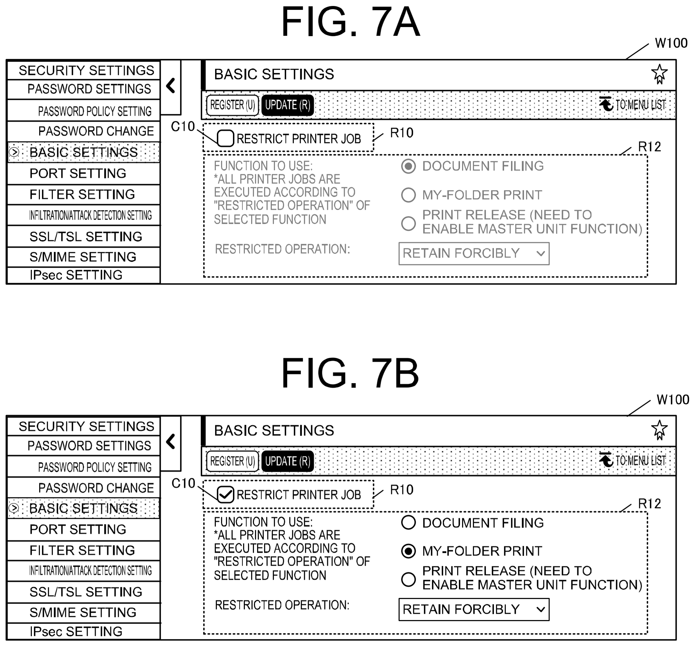

FIG. 7 includes views illustrating an operation example before and after the user inputs the selection commands in the printer job execution restriction selection area R10 and the hold function selection area R12 of the basic setting screen W100, which is the management screen exemplified in FIG. 6. FIG. 7A illustrates an operation example before the user inputs the selection commands. Meanwhile, FIG. 7B illustrates a situation where the user has ticked the check box C10 in the printer job execution restriction selection area R10 and the hold function has been changed from the document filing function to the my-folder print function via the hold function selection area R12.

When the check box C10 in the printer job execution restriction selection area R10 is ticked, and the print job execution restriction is enabled, the grayed-out display of the hold function selection area R12 is canceled, and the hold function can be selected. The user can select the desired hold function via the hold function selection area R12 in the selectable state.

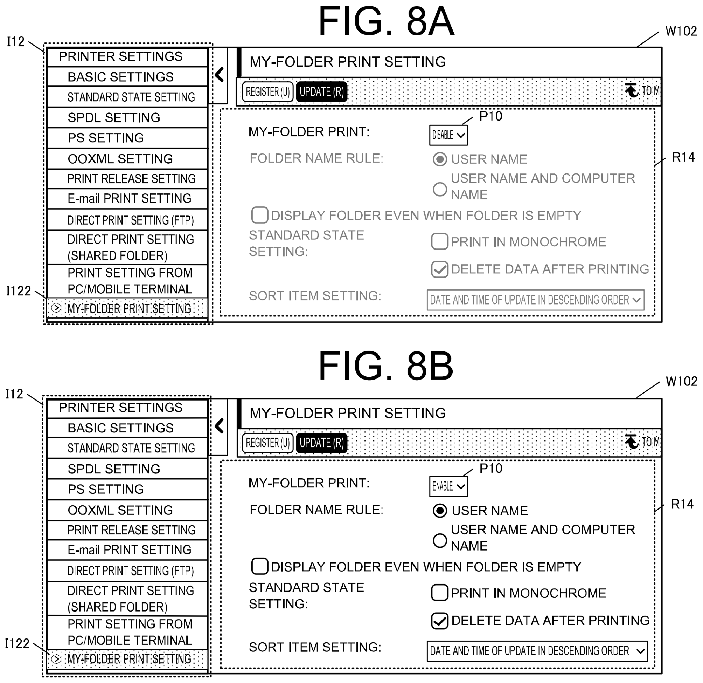

FIG. 8A is a view illustrating an exemplary display configuration of a my-folder print setting screen W102, which is in a default setting state and is displayed as the individual screen by the at least one controller 11 when the print job execution restriction exemplified in FIG. 7A is disabled and the at least one controller 11 accepts the selection command of the my-folder print setting I122 included in the printer setting items I12. On the my-folder print setting screen W102, a pull-down menu P10 for accepting a selection command to enable/disable the my-folder print function is displayed actively, and enabling/disabling of the my-folder print function can be selected (an initial value is "disable").

Meanwhile, FIG. 8B illustrates an exemplary display configuration of the my-folder print setting screen W102 in a case where the check box C10 in the printer job execution restriction selection area R10 is ticked on the basic setting screen W100 and the hold function is changed from the document filing function to the my-folder print function via the hold function selection area R12. The selection command on the basic setting screen W100 as the management screen is reflected to the display content of the my-folder print setting screen W102 as the individual screen. Thus, on the my-folder print setting screen W102 exemplified in FIG. 8B, the grayed-out display of a setting area R14, which is related to the setting of the my-folder print function and includes the pull-down menu P10 for accepting the selection command to enable/disable the my-folder print function, is canceled, and the setting can be made in the setting area R14.

### 1.3.3 Output Control of Individual Screen Corresponding to Different Hold Function from Hold Function, Selection Command of Which is Accepted via Management Screen

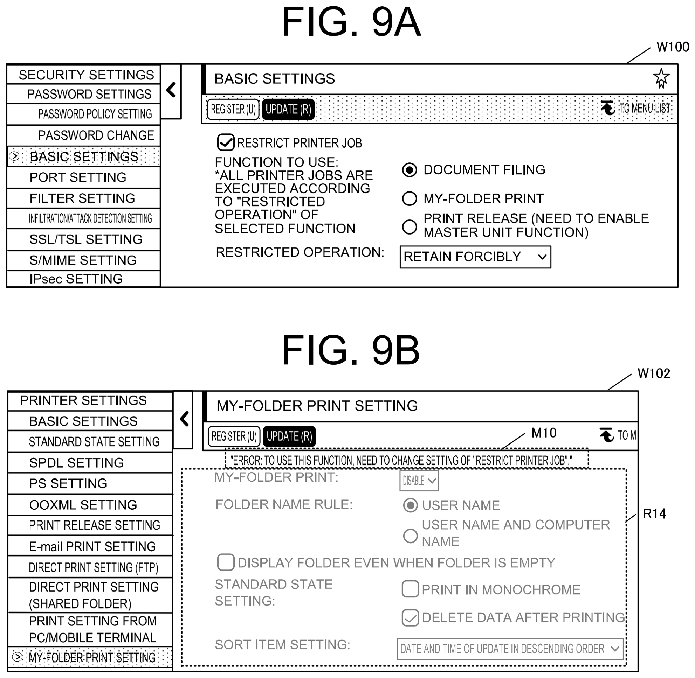

Next, a description will be made on a mode of controlling the output of the individual screen that corresponds to a different hold function from the hold function, the selection command of which has been accepted via the management screen. FIG. 9A illustrates an operation example in a case where the check box C10 in the printer job execution restriction selection area R10 is ticked on the basic setting screen W100 in the default setting state illustrated in FIG. 7A and the document filing function is set to be enabled as the hold function. FIG. 9B illustrates an exemplary display configuration of the my-folder print setting screen W102 as the individual screen that is displayed by the at least one controller 11 when the at least one controller 11 accepts the selection command of the my-folder print setting I122 included in the printer setting items I12 in a selection state on the basic setting screen W100 illustrated in FIG. 9A.

As illustrated in FIG. 9B, the setting area R14 related to the setting of the my-folder print function is grayed out, and the setting in the setting area R14 cannot be made. At this time, since the setting input via the my-folder print setting screen W102 is restricted, the my-folder print function cannot be enabled. Thus, it may prompt the user's attention by displaying a message M10 indicating that the setting on the basic setting screen W100 is required to enable the my-folder print function (for example, "Error: To use this function, the setting needs to be changed in [restrict printer job]."). At this time, it is possible to provide a measure that facilitates screen transition to the basic setting screen W100, and an example of such a measure is setting of a hyperlink, which accepts a screen transition command to the basic setting screen W100, to a character string of "[restrict printer job]".

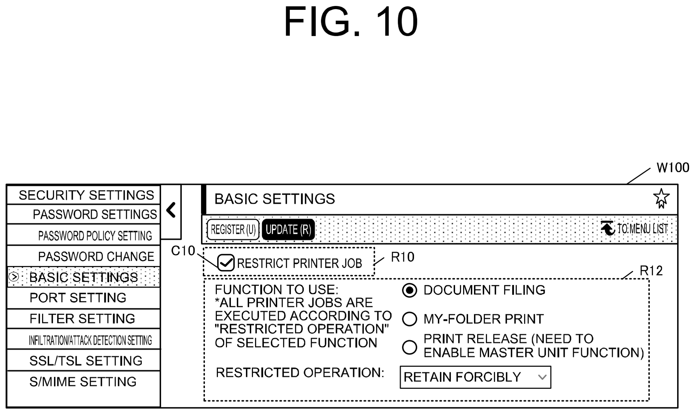

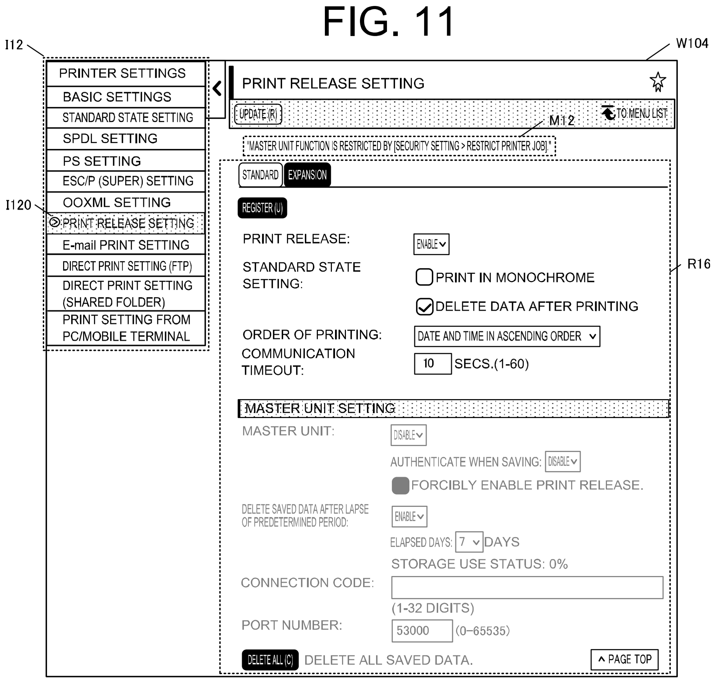

FIG. 10 illustrates an operation example in a case where the document filing function is selected as the hold function in the hold function selection area R12. FIG. 11 is a view illustrating an exemplary display configuration of a print release setting screen W104 that is displayed as the individual screen by the at least one controller 11 when the at least one controller 11 accepts the selection command of the print release setting I120, which is included in the printer setting items I12, in a state where the document filing function (FIG. 10) or the my-folder print function (FIG. 7B) is selected as the hold function.

The print release setting screen W104 exemplified in FIG. 11 includes a setting area R16 where settings related to the print release function are accepted. As exemplified in FIG. 10, in a state where the function other than the print release function is selected as the hold function (the enabled state), a master unit setting area in the setting area R16 is grayed out, and a master unit setting cannot be made. At this time, it may prompt the user's attention by displaying a message M12 indicating that the input of the setting via the master unit setting area is restricted (for example, "master unit setting is restricted by [security setting > restrict printer job].").

### 1.3.4 Output Control of Individual Screen Corresponding to Hold Function, Cancellation Command of Which is Accepted, upon Acceptance of Cancellation Command of Hold Function, Selection Command of Which Has Been Accepted Via Management Screen

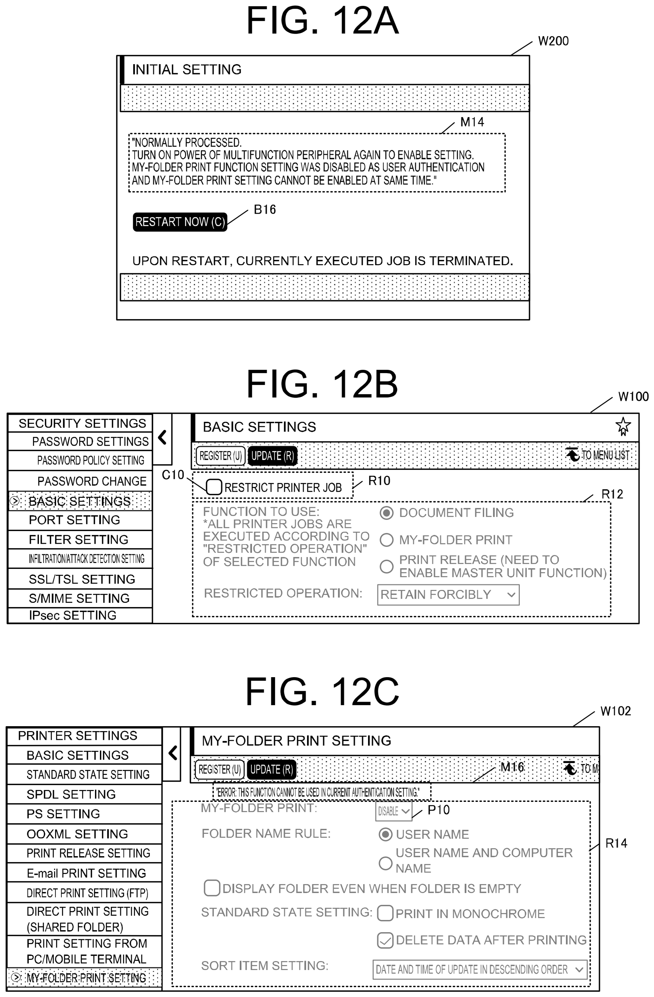

Next, a description will be made on a mode of controlling the output of the individual screen corresponding to the hold function, a cancellation command of which is accepted, in the case where the cancellation command of the hold function, the selection command of which has been accepted via the management screen, is accepted. FIG. 12 includes views illustrating an operation example of a case where, when the my-folder print function is enabled as the hold function, the my-folder print function is canceled on the basis of the cancellation command that is associated with enabling of a user authentication function for the multifunction peripheral 10. When the user authentication function for the multifunction peripheral 10 is set to be enabled, the user who can use the multifunction peripheral 10 is limited to a specific user (a login user). As a result, an advantage of the my-folder print function is deteriorated. Thus, simultaneous enabling of the user authentication function and the my-folder print function is set to be prohibited. Here, when the function other than the my-folder print function is enabled as the hold function, cancellation processing thereof that is associated with enabling of the user authentication function is not executed.

FIG. 12A is a view illustrating an exemplary display configuration of an initial setting screen W200 after the user authentication function is enabled. The initial setting screen W200 includes a message M14 and a restart now button (C) B16. The message M14 indicates that the my-folder print function is disabled in association with enabling of the user authentication function ("Normally processed. Turn on power of multifunction peripheral again to enable the setting. My-folder print function setting was disabled as user authentication and my-folder print setting cannot be enabled at the same time."). The restart now button (C) B16 is used to accept input of a restart command of the multifunction peripheral 10. When accepting a selection command of the restart now button (C) B16 from the user, the at least one controller 11 executes restart processing of the multifunction peripheral 10.

FIG. 12B illustrates an exemplary display configuration of the basic setting screen W100 after the user authentication function is enabled. In association with enabling of the user authentication function, the check box C10 in the printer job execution restriction selection area R10 is unticked. Since the other configuration can be the same as the configuration of the basic setting screen W100 exemplified in FIG. 7A, the description thereon will be omitted here. FIG. 12C illustrates an exemplary display configuration of the my-folder print setting screen W102 after the user authentication function is enabled. On the my-folder print setting screen W102 that is exemplified in FIG. 12C, a message M16 is displayed to indicate that this function cannot be used due to enabling of the user authentication function ("This function cannot be used in current authentication setting."). Since the other display contents can be the same as those on the my-folder print setting screen W102 exemplified in FIG. 9B, the description thereon will be omitted here.

### 1.3.5 Output Control of Management Screen When Setting Command of Hold Function is Accepted via Individual Screen

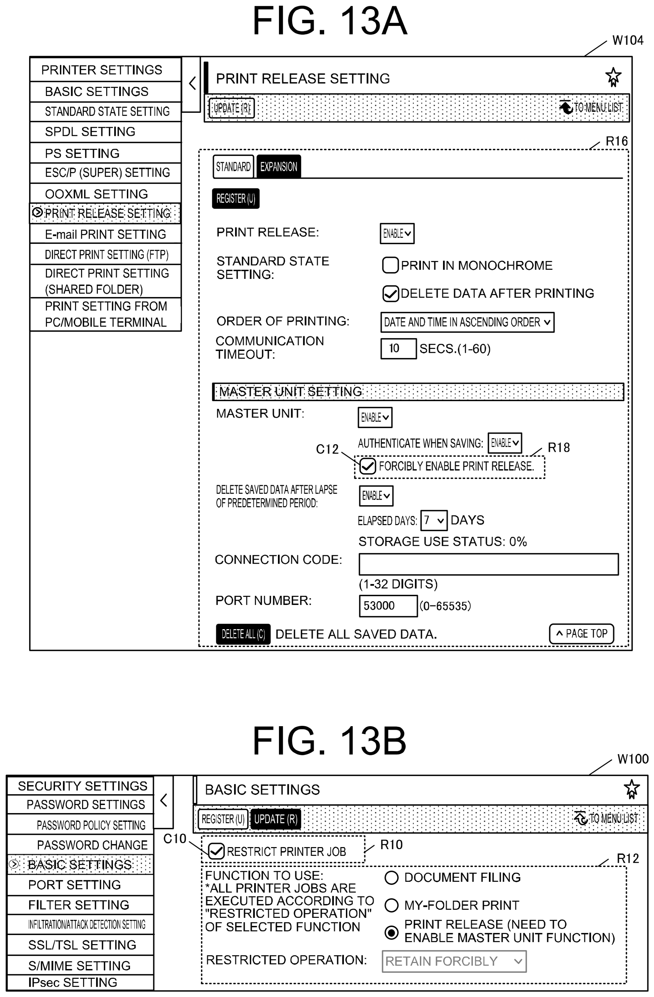

Next, a description will be made on a mode of controlling the output of the management screen when the setting command of the hold function is accepted via the individual screen. FIG. 13A is a view illustrating an operation example in a case where the output of the basic setting screen W100 is in the default setting state and, regardless of the user's command, a function to hold the print release job is forcibly set from being disabled to being enabled via a forcible command setting area R18 that is provided in the setting area R16 of the print release setting screen W104. The forcible command setting area R18 includes a check box C12 as a specific setting value for accepting a setting command to forcibly enable the print release function. When the user ticks the check box C12, as illustrated in FIG. 13B, the at least one controller 11 enables the print job execution restriction and sets the print release function as the hold function.

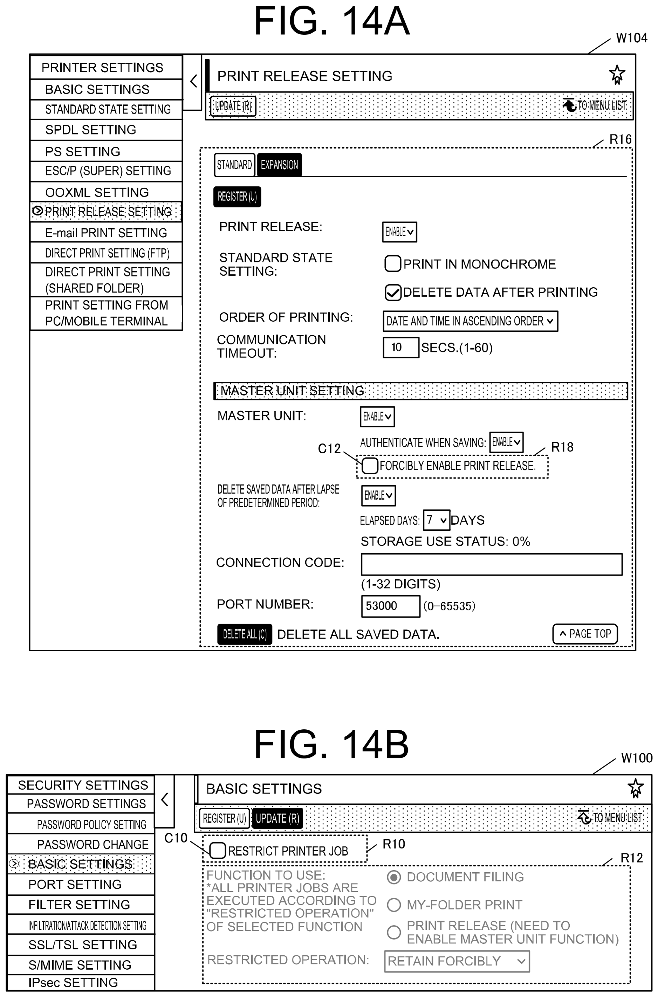

Meanwhile, FIG. 14A is a view illustrating an operation example of a case where, regardless of the user's command, the function to hold the print release job is forcibly set from being enabled to being disabled via the forcible command setting area R18 that is provided in the setting area R16 of the print release setting screen W104. When the user unticks the check box C12, as illustrated in FIG. 14B, the at least one controller 11 disables the print job execution restriction, sets the document filing function in the default setting state as the hold function, and grays out the hold function selection area R12 to disallow the selection of the hold function.

### 1.3.6 Output Control for Outputting Individual Screen in State Where Application of Specific Setting Value is Enabled on Individual Screen Corresponding to Hold Function, Selection Command of Which Has Been Accepted via Management Screen

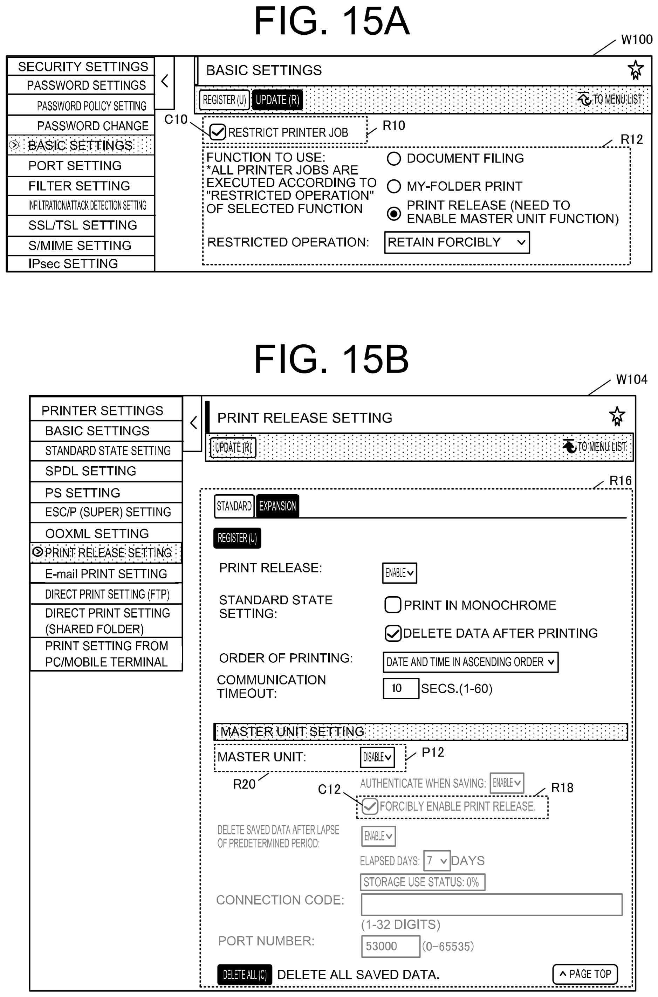

Next, a description will be made on a mode of outputting the individual screen in a state where the application of the specific setting value is enabled on the individual screen corresponding to the hold function, the selection command of which has been accepted via the management screen. FIG. 15A illustrates an operation example of a case where the print release function is selected as the hold function in the hold function selection area R12. FIG. 15B is a view illustrating an exemplary display configuration of the print release setting screen W104 that is displayed as the individual screen by the at least one controller 11 when the at least one controller 11 accepts the selection command of the print release setting I120, which is included in the printer setting items I12 in a state where the print release function is selected as the hold function. In this case, the at least one controller 11 ticks the check box C12 in the forcible command setting area R18 and enables a function to forcibly hold the print release job regardless of the user's command. The master unit setting related to the print release function can be grayed out until the master unit setting is enabled via a pull-down menu P12 that is provided in a master unit enabling setting area R20.

### 1.3.7 Output Control for Outputting Management Screen in State Where Specific Hold Function is Selected When Selection Command to Disable Print Job Execution Restriction is Accepted via Management Screen

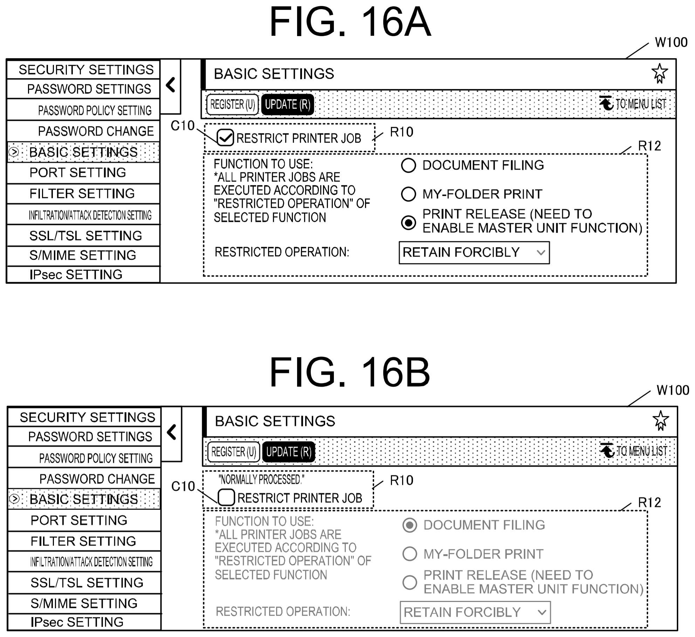

Next, a description will be made on a mode of outputting the management screen in a state where the specific hold function is selected when the selection command to disable the print job execution restriction is accepted via the management screen. FIG. 16A illustrates an operation example of a case where the print release function is selected as the hold function in the hold function selection area R12, and is the same as FIG. 15A. When the user unticks the check box C10 in the printer job execution restriction selection area R10 from the state exemplified in FIG. 16A, as illustrated in FIG. 16B, the at least one controller 11 changes the hold function from the print release function to the document filing function in the default setting state, then grays out the hold function selection area R12, and disallows the selection of the hold function.

### 1.3.8 Output Control for Restricting Output of Hold Function, Selection Command of Which Can Be Input Via Management Screen, According to Security Strength of User Authentication

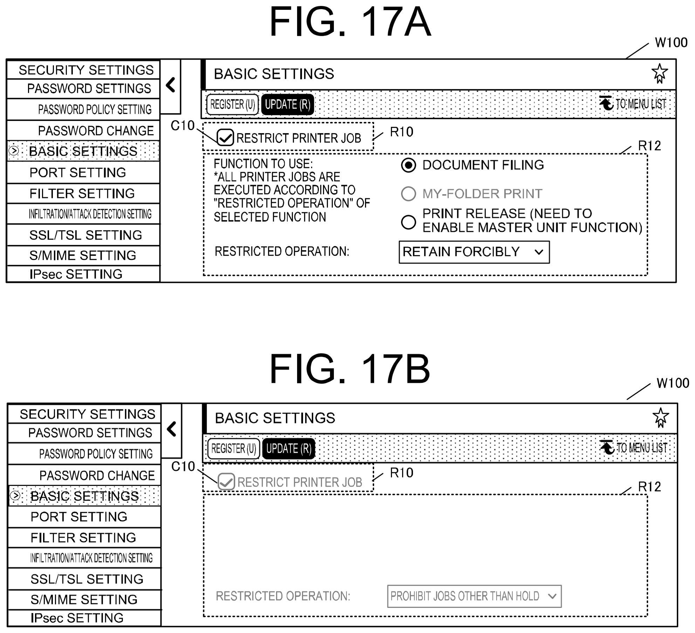

Next, a description will be made on a mode of restricting output of the hold function, the selection command of which can be input via the management screen, according to security strength of user authentication. FIG. 17A illustrates an example in which, for example, in the case where the user authentication at a security level using a combination of a login user name and a password is enabled, the my-folder print function in the hold function selection area R12 is grayed out such that the my-folder print function cannot be selected.

Meanwhile, FIG. 17B illustrates an example in which, for example, in the case where the user authentication at a high security level that conforms to Collaborative Protection Profile for Hardcopy Devices (HCD cPP) is enabled, the print release function and the my-folder print function cannot be enabled. Thus, options including the document filing function, the print release function, and the my-folder print function in the hold function selection area R12 are not displayed. In this way, it is possible to restrict the output of the hold function, the selection command of which can be input via the management screen, according to the security strength of the user authentication. Thus, the user management based on the security strength is facilitated.

As it has been described so far, according to the first embodiment, it is possible to execute the exclusive output control of the individual screen according to the selection command on the management screen and to execute the output control of the management screen on the basis of the setting command on the individual screen. Therefore, it is possible to facilitate understanding of which hold function can be used for the job execution and thus to improve the user's convenience in use of the hold function.

### 2. Second Embodiment

A second embodiment is an embodiment in which the configuration according to the first embodiment is applied to device cloning. The device cloning is a mechanism that various types of setting information of the multifunction peripheral (an import source) are imported (copied) to another multifunction peripheral (an import destination) via a recording medium such as the USB memory, thereby avoiding trouble of repeatedly making the same setting for each of the plural multifunction peripherals. By using the device cloning, for example, it is possible to reflect (apply) the setting contents of the hold function in the multifunction peripheral as the import source to the multifunction peripheral as the import destination.

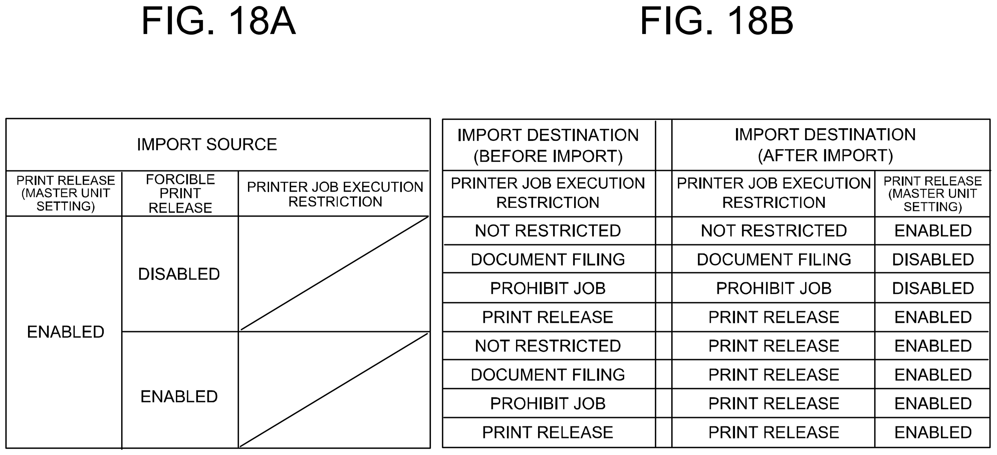

FIG. 18A is a table in which setting contents related to the print release (the master unit setting), the forcible print release, and the printer job execution restriction in the multifunction peripheral as the import source are summarized. In FIG. 18A, the print release function (the master unit setting) to accept the input of the setting command via the individual screen is set to be enabled, and, similarly, the forcible print release function is set to be disabled or enabled. Regarding the printer job execution restriction, the selection command of which is accepted via the management screen, it is indicated that there is no setting information to be subjected to the device cloning (diagonal lines in frames).

FIG. 18B is a table in which the setting contents related to the printer job execution restriction, which are set in the multifunction peripheral as the import destination before the setting information of the import source is imported, setting contents related to the printer job execution restriction, to which the contents of the imported setting information are reflected after the import of the setting information, and the print release (the master unit settings) are summarized.

As illustrated in FIG. 18B, in the case where the forcible print release is set to be disabled in the import source, the setting content of the printer job execution restriction (any of not restricted, document filing, prohibit job, and print release) is not changed before and after the import of the setting information. Meanwhile, in the case where the forcible print release is set to be enabled in the import source, the setting content of the forcible print release in the import source is reflected to the setting contents of the printer job execution restriction after the import of the setting information. Thus, all the setting contents are changed to the print release.

Here, after the setting information in the import source is imported, the print release (the master unit setting) is set to be enabled for all the setting contents other than the setting contents (document filing and prohibit job) of the printer job execution restriction before the import.

As it has been described so far, according to the second embodiment, the settings related to the hold function, the setting commands of which have been accepted via the individual screen, can be reflected to the settings, the selection commands of which are accepted via the management screen. Thus, even in a situation where the setting contents related to the printer job execution restriction cannot be acquired at the time of the device cloning, the setting contents of the hold function in the multifunction peripheral as the import source can be reflected (applied) to the multifunction peripheral as the import destination.

### 3. Third Embodiment

In the first embodiment, the description has been made on the mode of controlling the output of the individual screen related to each of the various hold functions according to the selection command on the management screen in a main body setting of the multifunction peripheral 10 as the image processing apparatus. In a third embodiment, a description will be made on processing that is executed by the multifunction peripheral 10 in the case where the main body setting of the multifunction peripheral 10 does not match a setting of a printer driver (hereinafter, simply referred to as a driver) provided in the terminal device such as the PC.

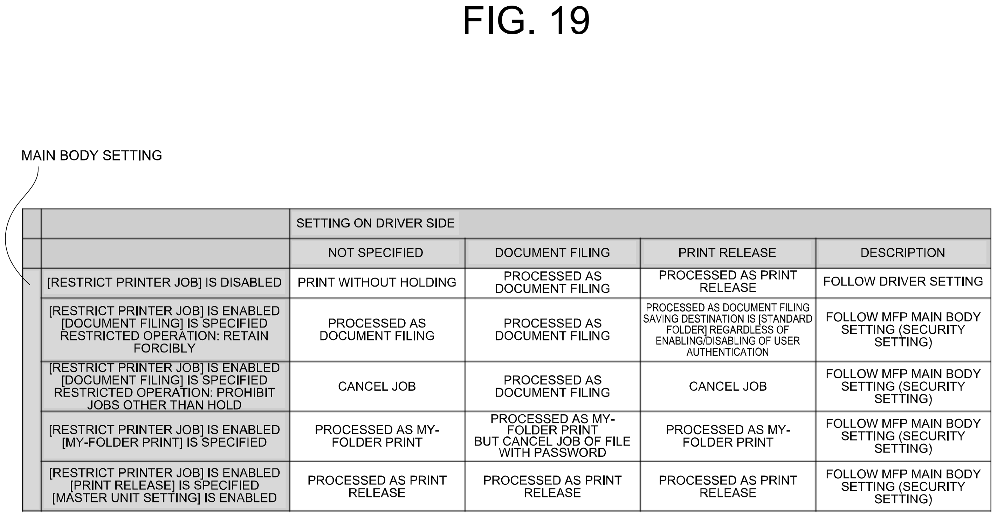

FIG. 19 is a table in which correspondence relationships between the main body settings of the multifunction peripheral 10 and the settings on the driver side are summarized as a table. With reference to FIG. 19, a description will be made on five modes as the main body settings of the multifunction peripheral 10 that are
(setting 1): "restrict printer job" is disabled (see FIG. 6),
(setting 2): "restrict printer job" is enabled, "document filing" is selected as the function to be used, and "retain forcibly" is specified as the restricted operation,
(setting 3): "restrict printer job" is enabled, "document filing" is selected as the function to be used, and "prohibit jobs other than hold" is specified as the restricted operation,
(setting 4): "restrict printer job" is enabled, and "my-folder print" is selected as the function to be used, and
(setting 5): "restrict printer job" is enabled, and "print release" is set as the function to be used, and a description will also be made on a mode of a case where, for the settings in (setting 1) to (setting 5) described above, the settings on the driver side are "unspecified", "document filing", and "print release".

### (1) Setting 1

In the case where the main body setting of the multifunction peripheral 10 is the setting 1, and the setting on the driver side is "unspecified", the multifunction peripheral 10 does not hold the received printer job and performs the printer job. In the case where the setting on the driver side is "document filing", the multifunction peripheral 10 processes the received printer job as "document filing" according to the setting on the driver side. Furthermore, when the setting on the driver side is "print release", the multifunction peripheral 10 processes the received printer job as "print release" according to the setting on the driver side. When the main body setting is the setting 1, the multifunction peripheral 10 processes the received printer job according to the setting on the driver side.

### (2) Setting 2

In the case where the main body setting of the multifunction peripheral 10 is the setting 2, and the setting on the driver side is "unspecified", the multifunction peripheral 10 processes the received printer job as "document filing" according to the main body setting. In the case where the setting on the driver side is "document filing", the multifunction peripheral 10 processes the received printer job as "document filing" according to the main body setting. Furthermore, in the case where the setting on the driver side is "print release", the multifunction peripheral 10 processes the received printer job as "document filing" according to the main body setting, and stores the print data of the received printer job in a [standard folder] regardless of enabling/disabling of the user authentication. In the case where the main body setting is the setting 2, the multifunction peripheral 10 processes the received printer job according to the main body setting (the security setting) of the multifunction peripheral 10.

### (3) Setting 3

In the case where the main body setting of the multifunction peripheral 10 is the setting 3, and the setting on the driver side is "unspecified", the multifunction peripheral 10 cancels the received printer job according to the main body setting (the restricted operation). In the case where the setting on the driver side is "document filing", the multifunction peripheral 10 processes the received printer job as "document filing" according to the main body setting. Furthermore, in the case where the setting on the driver side is "print release", the multifunction peripheral 10 cancels the received printer job according to the main body setting. In the case where the main body setting is the setting 3, the multifunction peripheral 10 processes the received printer job according to the main body setting (the security setting) of the multifunction peripheral 10.

### (4) Setting 4

In the case where the main body setting of the multifunction peripheral 10 is the setting 4, and the setting on the driver side is "unspecified", the multifunction peripheral 10 processes the received printer job as "my-folder print" according to the main body setting. In the case where the setting on the driver side is "document filing", the multifunction peripheral 10 processes the received printer job as "my-folder print". However, in the case where the password is attached to the received print data, the multifunction peripheral 10 cancels the printer job. Furthermore, in the case where the setting on the driver side is "print release", the multifunction peripheral 10 processes the received printer job as "my-folder print" according to the main body setting. In the case where the main body setting is the setting 4, the multifunction peripheral 10 processes the received printer job according to the main body setting (the security setting) of the multifunction peripheral 10.

### (5) Setting 5

In the case where the main body setting of the multifunction peripheral 10 is the setting 5, and the setting on the driver side is "unspecified", the multifunction peripheral 10 processes the received printer job as "print release" according to the main body setting. In the case where the setting on the driver side is "document filing", the multifunction peripheral 10 processes the received printer job as "print release" according to the main body setting. Furthermore, in the case where the setting on the driver side is "print release", the multifunction peripheral 10 processes the received printer job as "print release" according to the main body setting. In the case where the main body setting is the setting 5, the multifunction peripheral 10 processes the received printer job according to the main body setting (the security setting) of the multifunction peripheral 10. In the case where the print release setting is not correctly set (in the case where the master unit setting is not enabled and remains disabled), all the jobs are cancelled regardless of the setting on the driver side.

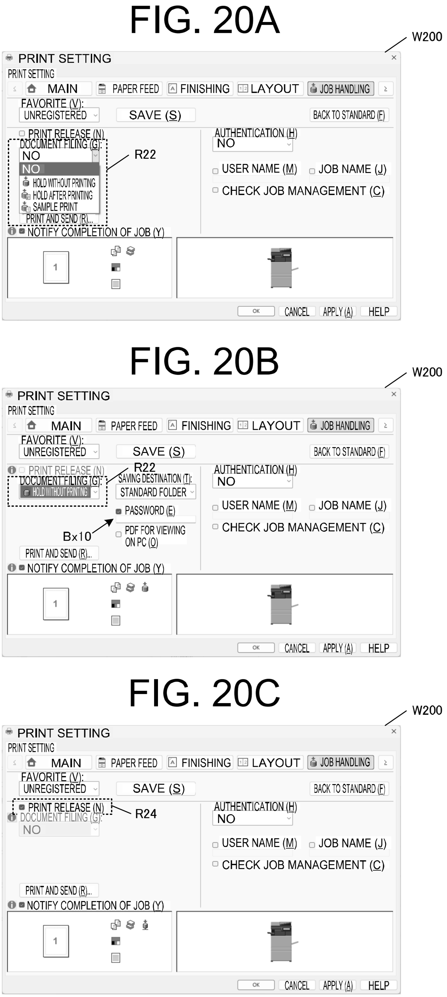

FIG. 20A is a view illustrating an exemplary display configuration of a setting screen W200 on the driver side, and is a view illustrating a situation where a selection state in a document filing function selection area R22. On the setting screen W200 exemplified in FIG. 20, as the document filing functions, "no", "hold without printing", "hold after printing", and "sample print" are displayed in selectable states, and FIG. 20 illustrates a situation where "no" of those is selected. In "hold without printing", the received print data is held in the multifunction peripheral 10 without being printed. In "hold after printing", the received print data is held in the multifunction peripheral 10 after being printed. In "sample print", when plural copies are printed, only one copy is printed, and the rest of copies are printed after printed contents are checked.

FIG. 20B illustrates a situation where "hold without printing" is selected from the document filing function selection area R22. When the document filing function (the "hold without printing" function herein) is selected, a password can be input (set), via a password input box Bx10, for the print data to be saved in a saving destination folder ([standard]). Even in the case where the document filing function is set to be enabled on the driver side, as described with reference to FIG. 19, the setting on the driver side can be reflected to the processing in the multifunction peripheral 10 as long as the main body setting on the multifunction peripheral 10 side is "setting 1" ("restrict printer job" is disabled). Accordingly, when the main body setting ("restrict printer job") of the multifunction peripheral 10 is enabled, the document filing function selection area R22 is grayed out and thus cannot be selected by the user. When the main body setting ("restrict printer job") of the multifunction peripheral 10 is disabled, the document filing function selection area R22 is activated and thus can accept the selection by the user.

FIG. 20C is a view illustrating a situation where the print release function in a print release selection area R24 is selected. When the print release function is enabled on the driver side, a check box provided in the print release selection area R24 is ticked, and the print release function can thereby be set to be enabled. In this case, as described with reference to FIG. 19, as long as the main body setting on the multifunction peripheral 10 side is "setting 1" ("restrict printer job" is disabled), the setting on the driver side can be reflected to the processing in the multifunction peripheral 10. Thus, when the main body setting ("restrict printer job") of the multifunction peripheral 10 is enabled, the print release selection area R24 is grayed out and thus cannot be selected by the user. When the main body setting ("restrict printer job") of the multifunction peripheral 10 is disabled, the print release selection area R24 is activated and can be selected by the user.

In the case where the processing that differs from the settings on the driver side is executed in the multifunction peripheral 10, notification of such a case may be made on the output device 13 (the display device) of the multifunction peripheral 10 or a display device of the terminal device, such as the PC, in which the driver is installed.

As it has been described so far, according to the third embodiment, even when the main body setting of the multifunction peripheral does not match the setting on the driver side, the various hold functions can be implemented according to the main body setting of the multifunction peripheral. Thus, it is possible to improve the user's convenience in use of the hold function.

The present disclosure is not limited to the above-described embodiments, and various modifications can be made thereto. That is, the technical scope of the present disclosure also includes an embodiment that can be obtained by combining technical measures that are appropriately modified without departing from the gist of the present disclosure.

Although some parts of the above-described embodiments are described separately for convenience of the description, it is needless to say that the embodiments can be combined and implemented within a technically allowable range.

Each of the programs that operate on each device (apparatus) in the embodiments is a program that controls the CPU or the like (a program that causes the computer to function) so as to implement the functions in the above-described embodiments. The information handled by these devices (apparatuses) is temporarily stored in a temporary storage device (for example, the RAM) at the time of processing thereof, is then stored in a storage device such as any of various types of the ROM or the HDD, and is read, modified, or written by the CPU when necessary.

A non-transitory computer-readable recording medium that records the programs in the information processing apparatus as referred to herein may be any of a semiconductor medium (for example, the ROM or a non-volatile memory card), an optical recording medium/magneto-optical recording medium (for example, a digital versatile disc (DVD)), a magneto optical disc (MO), a MiniDisc (MD), a compact disc (CD), and a Blu-ray^{®} disc (BD)), and a magnetic recording medium (for example, a magnetic tape and a flexible disk). In this case, the programs that are recorded in the recording medium are each read by the computer in the information processing apparatus and executed by the computer. As a result, not only the functions in the above-described embodiments are implemented, but also the functions of the present disclosure are implemented through processing that is executed in cooperation with an operating system, another application program, or the like on the basis of commands of the program.

For market distribution, the program can be stored and distributed in a portable recording medium or transferred to a server computer that is connected via the network such as the Internet. In this case, of course, a storage device of the server computer is also included in the present disclosure.

The functional blocks or the various features of the device/apparatus used in the above-described embodiments can be implemented or executed by an electrical circuit, such an integrated circuit or a plurality of integrated circuits. The electrical circuits that are designed to implement the functions described in the present specification may include a general-purpose processor, a digital signal processor (DSP), an application-specific integrated circuit (ASIC), a field programmable gate array (FPGA) and other programmable logic devices, a discrete gate and transistor logic, a discrete hardware component, and any combination thereof. The general-purpose processor may be a microprocessor, a conventional processor, a controller, a microcontroller, or a state machine. The above-described electric circuit may be a digital circuit or an analog circuit. In the case where integrated circuit technology that replaces the current integrated circuits appears due to the progress of the semiconductor technology, a new integrated circuit that is realized by the technology can also be used in one or more aspects of the present disclosure.

### REFERENCE SIGNS LIST

10 multifunction peripheral
11 controller
13 output device
15 operation input device
17 communicator
19 image forming device
21 image reader
23 storage
231 control program
232 output control program
233 job program
2331 handling program
2333 hold function program
234 job storage area

## Claims

1. An image processing apparatus (10) that holds a print job and applies predetermined processing thereto, the image processing apparatus (10) comprising:
an output device (13); and
one or more controllers (11), wherein
the output device (13) outputs: a management screen on which a selection command of the predetermined processing to be applied to the print job is accepted; and an individual screen on which input of an individual setting command corresponding to the predetermined processing is accepted, and
the one or more controllers (11) control output of the individual screen according to the selection command on the management screen.

2. The image processing apparatus (10) according to claim 1, wherein
the one or more controllers (11) control the output of the individual screen corresponding to the predetermined processing, the selection command of which has been accepted via the management screen.

3. The image processing apparatus (10) according to claim 1, wherein
the one or more controllers (11) control the output of the individual screen corresponding to an other predetermined processing different from the predetermined processing, the selection command of which has been accepted via the management screen.

4. The image processing apparatus (10) according to claim 3, wherein
when controlling the output of the individual screen related to the other predetermined processing, the one or more controllers (11) output a message indicating that input of a setting command related to the other predetermined processing is restricted.

5. The image processing apparatus (10) according to claim 1, wherein
when accepting a cancellation command of the predetermined processing, the selection command of which has been accepted via the management screen, the one or more controllers (11) control the output of the individual screen corresponding to the predetermined processing, the cancellation command of which is accepted.

6. The image processing apparatus (10) according to claim 5, wherein
the cancellation command of the predetermined processing is a cancellation command that is based on enabling of a user authentication function.

7. The image processing apparatus (10) according to claim 1, wherein
when accepting the setting command related to the predetermined processing via the individual screen, the one or more controllers (11) control the output of the management screen.

8. The image processing apparatus (10) according to claim 7, wherein
when accepting the setting command that enables application of a specific setting value related to the predetermined processing via the individual screen, the one or more controllers (11) enable execution restriction of the print job on the management screen, and output the management screen in a state where the predetermined processing related to the specific setting value is selected.

9. The image processing apparatus (10) according to claim 7, wherein
when accepting the setting command to disable application of a specific setting value related to the predetermined processing via the individual screen, the one or more controllers (11) disable execution restriction of the print job on the management screen, and output the management screen in a state where specific predetermined processing is selected.

10. The image processing apparatus (10) according to claim 2, wherein
on the individual screen corresponding to the predetermined processing, the selection command of which has been accepted via the management screen, the one or more controllers (11) output the individual screen in a state where application of a specific setting value is enabled.

11. The image processing apparatus (10) according to claim 1, wherein
when accepting a selection command that disables execution restriction of the print job via the management screen, the one or more controllers (11) output the management screen in a state where specific predetermined processing is selected.

12. The image processing apparatus (10) according to claim 1, wherein
the one or more controllers (11) restrict output of the predetermined processing, the selection command of which can be input via the management screen, according to security strength of user authentication.

13. A control method for an image processing apparatus that holds a received print job and applies predetermined processing thereto, the control method comprising:
outputting: a management screen on which a selection command of the predetermined processing to be applied to the print job is accepted; and an individual screen on which input of an individual setting command corresponding to the predetermined processing is accepted; and
controlling output of the individual screen according to the selection command on the management screen.
